(19) Europäisches Patentamt
European Patent Office
Office européen des brevets

(11) EP 2 351 785 A1

(12) **EUROPEAN PATENT APPLICATION**
published in accordance with Art. 153(4) EPC

(43) Date of publication:
**03.08.2011 Bulletin 2011/31**

(21) Application number: **09826136.5**

(22) Date of filing: **12.11.2009**

(51) Int Cl.:
***C08J 5/22*** *(2006.01)* ***B01J 41/14*** *(2006.01)*
***B01J 47/12*** *(2006.01)* ***C08F 26/02*** *(2006.01)*
***H01B 1/06*** *(2006.01)* ***H01B 13/00*** *(2006.01)*
***H01M 8/02*** *(2006.01)* ***H01M 8/10*** *(2006.01)*

(86) International application number:
**PCT/JP2009/069290**

(87) International publication number:
**WO 2010/055889 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008 JP 2008292344**

(71) Applicant: **Tokuyama Corporation**
**Shunan-shi, Yamaguchi-ken 745-8648 (JP)**

(72) Inventors:
- **DAIKOKU, Yusuke**
  **Shunan-shi**
  **Yamaguchi 745-8648 (JP)**
- **ISOMURA, Takenori**
  **Shunan-shi**
  **Yamaguchi 745-8648 (JP)**
- **FUKUTA, Kenji**
  **Shunan-shi**
  **Yamaguchi 745-8648 (JP)**
- **YANAGI, Hiroyuki**
  **Shunan-shi**
  **Yamaguchi 745-8648 (JP)**
- **YAMAGUCHI, Masao**
  **Shunan-shi**
  **Yamaguchi 745-8648 (JP)**

(74) Representative: **Duckworth, Timothy John**
**J.A. Kemp & Co.**
**14 South Square**
**Gray's Inn**
**London WC1R 5JJ (GB)**

# (54) ANION-EXCHANGE MEMBRANE AND METHOD FOR PRODUCING SAME

(57) Disclosed is an anion-exchange membrane which does not easily deteriorate even when used at high temperatures in a strong alkaline atmosphere. Also disclosed is a method for producing the anion-exchange membrane. The anion-exchange membrane is a microporous membrane which is composed of a water-insoluble resin and an anion-exchange resin filling the pores of the microporous membrane. The anion-exchange resin is composed of an anion-exchange resin wherein a quaternary ammonium salt group serving as an anion-exchange group is directly bonded to an aliphatic hydrocarbon chain, said anion-exchange resin being obtained by polymerizing and crosslinking a monomer composition which contains a crosslinking agent and a monomer component including a diallyl ammonium salt.

EP 2 351 785 A1

**Description**

TECHNICAL FIELD

The present invention relates to an anion-exchange membrane and a method for producing the same. Further specifically, the present invention relates to an anion-exchange membrane preferably usable as a separation membrane for a fuel cell and a method for producing the same.

BACKGROUND ART

A solid polymer type fuel cell uses solid polymer such as ion-exchange resin as an electrolyte, and is relatively low in operation temperature. The solid polymer type fuel cell has, as shown in FIG 1, a basic structure wherein a space surrounded by cell bulkhead 1 having a fuel gas flow hole 2 and oxidizing agent gas flow hole 3, respectively communicated with outside, is divided by a membrane assembly in which a fuel chamber side gas diffusion electrode 4 and an oxidizing agent chamber side gas diffusion electrode 5 are bonded to both surfaces of a solid polymer electrolyte membrane 6 respectively, to form a fuel chamber 7 communicated with outside via the fuel gas flow hole 2 and an oxidizing agent chamber 8 communicated with outside via the oxidizing agent gas flow hole 3. Then, in the solid polymer type fuel cell having the above basic structure, a fuel such as hydrogen gas and methanol, etc. is supplied into said fuel chamber 7 via the fuel gas flow hole 2, and oxygen or oxygen containing gas such as air, acting as an oxidizing agent, is also supplied into the oxidizing agent chamber 8 via the oxidizing agent gas flow hole 3. Furthermore, an external load circuit is connected between both gas diffusion electrodes to generate electric energy.

When using a cation-exchange type electrolyte membrane as the solid electrolyte membrane 6, a proton (hydrogen ion) generated by contacting a fuel with a catalyst included in the electrode in the fuel chamber side gas diffusion electrode 4 conducts in the solid polymer electrolyte membrane 6 and moves into the oxidizing agent chamber 8 to generate water by reacting with oxygen in the oxidizing agent gas in the oxidizing agent chamber side gas diffusion electrode 5. On the other hand, an electron, generated in the fuel chamber side gas diffusion electrode 4 simultaneously with the proton, moves to the oxidizing agent chamber side gas diffusion electrode 5 through the external load circuit, so that it is possible to use the above reaction energy as an electric energy.

As the cation-exchange type electrolyte membrane in a solid polymer type fuel cell in which a cation-exchange type electrolyte membrane is used as the solid electrolyte membrane, a perfluorocarbon sulfonic acid resin membrane is most commonly used. However, in the cation-exchange type fuel cell using the perfluorocarbon sulfonic acid resin membrane, the following problems are brought up:

(i) Only noble metal catalyst is usable due to the strongly acidic reaction field and the perfluorocarbon sulfonic acid resin membrane is also expensive, resulting in limitations in cost reduction;
(ii) It is required to replenish water due to insufficient water retaining capacity; and
(iii) It is difficult to reduce electric resistance by decreasing a thickness of the membrane due to low physical strength.

To solve the above-mentioned problems, it has been examined to use hydrocarbon-based anion-exchange membrane instead of perfluorocarbon sulfonic acid resin membrane, and several of such solid polymer type fuel cells have been already proposed (Patent Articles 1 to 3). When using an anion-exchange membrane, ion species moving in the solid polymer electrolyte membrane 6 is a hydroxide ion, so that the reaction field is basic, and therefore, it is also possible to use a transition metal as a catalyst. Consequently, the above problem (i) can be solved. Also, the above problems (ii) and (iii) can be improved because in the hydrocarbon-based anion-exchange membrane, quality of material of its base material is a hydrocarbon-based resin such as polyolefin, easier for surface modification or processing compared to perfluorocarbon resin.

Note that the mechanism for generating electric energy in the fuel cell using the anion-exchange membrane is different from that in the fuel cell using a cation-exchange membrane, and is as follows. Namely, hydrogen or methanol and the like is supplied to the fuel chamber side, and oxygen and water are supplied to the oxidizing agent chamber side, so that the catalyst included in the electrode is contacted with the oxygen and water in the oxidizing agent chamber side gas diffusion electrode 5 to generate a hydroxide ion. The hydroxide ion conducts in the above solid polymer electrolyte membrane 6 comprised of the hydrocarbon-based anion-exchange membrane and moves to the fuel chamber 7 to generate water by reacting with fuel in the fuel chamber side gas diffusion electrode layer 4. Along with the above, an electron generated in the fuel chamber side gas diffusion electrode 4 is moved via the external load circuit into the oxidizing agent chamber side gas diffusion electrode 5, and the reaction energy is used as electric energy.

For an anion-exchange group used in the hydrocarbon-based anion-exchange membrane having the above advantages, a quaternary ammonium group is generally used (the above Patent Articles 1 to 3) because of its excellent ion conductivity, ease of availability of raw materials for producing the anion-exchange membrane, etc. Then, a hydrocarbon-based anion-exchange membrane having such a quaternary ammonium group as an anion-exchange group (hereinafter may also be referred to as "quaternary ammonium type hydrocarbon-based anion-exchange membrane") is normally produced by bringing a polymerizable composition, including a polymerizable monomer having a halogenoalkyl group such as chloromethylstyrene and a crosslinkable polymerizable monomer, into contact with a microporous film, filling the polymerizable composition into void portion of the microporous film, followed by polymerization and curing to obtain cross-linked hydrocarbon-based resin having a halogenoalkyl group; converting the above halogenoalkyl group into a quaternary ammonium group; and then, ion-exchanging the counterion of the quaternary ammonium group into a hydroxide ion. This method has characteristics that the chloromethylstyrene used as a monomer is easily permeated into void portion of the hydrocarbon-based porous film, and is most widely used as a method for producing a hydrocarbon-based anion-exchange membrane.

[Patent Article 1] Japanese Unexamined Patent Publication No. H11-135137
[Patent Article 2] Japanese Unexamined Patent Publication No. H11-273695
[Patent Article 3] Japanese Unexamined Patent Publication No. 2000-331693

## DISCLOSURE OF INVENTION

## PROBLEM TO BE SOLVED BY THE INVENTION

In a direct liquid fuel cell, the fuel is often added with an alkali such as potassium hydroxide for further improving reaction activity. It has been found that although there is no special practical problem in electric generation under relatively low temperature condition when the conventional chloromethylstyrene-based separation membrane is used in this type of usage, the performance is rapidly lowered when used under high temperature condition for obtaining high output. Then, the object of the present invention is to provide an anion-exchange membrane having high alkaline resistance.

## MEANS FOR SOLVING THE PROBLEM

The present inventors considered that the reason for deteriorating the conventional anion-exchange membrane when it is contacted with the alkali at high temperature is as follows. Namely, the present inventors estimated that it might be caused by the fact that a quaternary ammonium salt group is easily removed by nucleophilic substitution reaction with a hydroxide ion generated from the counterion or the alkali added to the fuel, etc., because the quaternary ammonium salt group, i.e. an anion-exchange group, is directly combined with a carbon at benzyl position of an aromatic ring in the conventional chloromethylstyrene-based separation membrane. Based on such an estimated deterioration mechanism, the present inventors has conceived of using a resin, in which a quaternary ammonium salt group is directly combined with its aliphatic hydrocarbon backbone, as an anion-exchange resin for forming a complex with the hydrocarbon-based microporous film.

Although an anion-exchange resin itself in which a quaternary ammonium salt group is directly combined with its aliphatic hydrocarbon backbone is known (Japanese Unexamined Patent Publications No. 2001-302729 and No. 2009-143975), there has not been any example using the anion-exchange resin for forming a complex with a microporous resin film to be used as an anion-exchange membrane as far as the present inventors know. For example, the above Japanese Unexamined Patent Publication No. 2001-302729 discloses following two methods for producing the above anion-exchange resin. Specifically, in the method (1), a polymer comprised of poly diallylamine derivative is cross-linked by using a cross-linking agent such as epichlorohydrin; and in the method (2), a monomer in which an amino group of diallylamine is converted to a quaternary ammonium salt is polymerized and cross-linked by using a cross-linking agent comprised of a compound containing two diallyl amino groups within one molecule. However, the resin obtained by these methods is an anion-exchange resin in clumped form or pearl-like form which is gel-like material, poor in self-supportability. Also, the above Japanese Unexamined Patent Publication No. 2009-143975 discloses that the obtained solid anion-exchange resin (cross-linked polymer) is formed into a membrane by heat treatment at 50°C for 2 hours, but fails to disclose that this resin is combined with a microporous resin film to obtain an anion-exchange membrane.
Since thermal plasticity is hardly shown with high crosslink density of a cross-linked polymer, it is difficult to form a membrane by heat treatment such as hot press. Therefore, for forming a membrane by heat treatment, a certain level of thermal plasticity is required, and the crosslink density can naturally be limited. Also, it is extremely difficult to make the cross-linked polymer thinner (e.g. as thin as 50 μm) and to form into a membrane showing high thickness uniformity by heat treatment. In the use as a separation membrane for a fuel cell, a thicker membrane indicates increase in membrane resistance, which is not preferable. Also, low thickness uniformity leads to instability in performance, which is not preferable. Furthermore, thus-obtained membrane may be reduced in strength due to swelling by water, liquid fuel and the like because no base material is used when this is used as a separation membrane for a fuel cell even if

this has a certain level of strength under normal conditions.

The present inventors considered that an anion-exchange membrane having the desired properties can be obtained by using a monomeric composition used in the above method (2) to fill the same into void portion of a base material comprised of a hydrocarbon-based microporous film followed by polymerization, and tried to prepare such a membrane. However, the above monomeric composition is extremely low in wettability to many microporous resin films including the hydrocarbon-based microporous film, and it is very difficult to introduce the monomeric composition into the void portion.

Based on the above findings, the present inventors further studied a method for more efficiently filling a diallylamine derivative monomer into void portion of porous film. As a result, it was found that the monomer can sufficiently be introduced in the above porous film by using a specific introduction accelerator, and that the anion-exchange membrane which is a complex membrane prepared by the above method has high alkaline resistance, and thus, the present invention came to be completed.

Namely, the present invention includes the following 1 to 11 subject matters.

1. An anion-exchange membrane comprising a microporous film of resin insoluble in water, and an anion-exchange resin filled in a void of the microporous film, wherein the anion-exchange resin comprises a cross-linked polymer having an anion-exchange group expressed by the following formula (1):

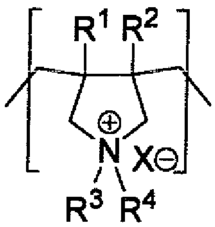

(1)

(where each of $R^1$, $R^2$, $R^3$ and $R^4$ independently indicates any one of a hydrogen atom, a halogen atom and an alkyl group having carbon number of 1 to 10, $R^3$ and $R^4$ may mutually be coupled to form a ring, and $X^-$ is a halide ion, a hydroxide ion or an anion of organic acid or inorganic acid).

2. The anion-exchange membrane as set forth in the above 1., wherein the cross-linked polymer has a cross-linking site expressed by the following formulas (2) or (2)':

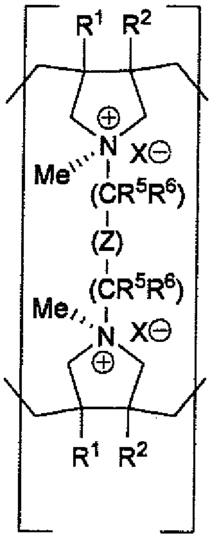

(2)

or

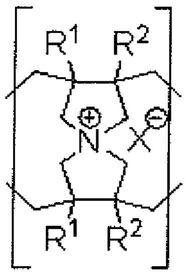

(2)'

{where $R^1$, $R^2$ and $X^-$ are respectively the same as the $R^1$, $R^2$ and $X^-$ in the above formula (1), $R^5$ and $R^6$ independently indicates a hydrogen atom, a halogen atom, an alkyl group having carbon number of 1 to 10 or a hydroxyl group, and Z is a group expressed by the following formula:

**[0017]** - (CH2) $_{n1}$-, -NH-, -N $(CH_3)$ -,

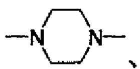、

-NH- $(CH_2)_3$-NH-, -NH- $(CH_2)_4$-NH-, -O-, - $(CH_2)_{n2}$-O- $(CH_2)_{n3}$-, -O- $(CH_2)_{n4}$-O-, -O- $(CH_2)_{n5}$- $(O\text{-}CH_2\text{-}CH_2)_{n6}$-O- (where n1 is an integer of 0 to 10, and n2, n3, n4, n5 and n6 are respectively independently an integer of 1 to 10)}.

3. A method for producing the anion-exchange membrane as set forth in the above 1. or 2. comprising:

(1) introducing a monomeric composition comprising a monomer component, including a diallyl ammonium salt, and a cross-linking agent in a void of a microporous film of resin insoluble in water, and
(2) polymerizing and crosslinking the monomeric composition introduced in the void of the microporous film.

4. The method as set forth in the above 3., wherein introduction of the monomeric composition into the void of

the microporous film in the step (1) is conducted by an introduction method comprising the step (1a) of preparing a first raw solution having permeability to the microporous film which is obtained by dissolving the monomer component and cross-linking agent in an introduction accelerator which is an organic solvent having permeability to the microporous film and water-miscible property, or a mixed solvent of a polar organic solvent except for the introduction accelerator or water and the introduction accelerator; and bringing the microporous film into contact with the first raw solution.

5. The method as set forth in the above 4., wherein the introduction method further comprises the step (1b) of preparing a second raw solution including a mixed solution of the introduction accelerator and a solution of the monomer component and the cross-linking agent, the mixed solution having lower concentration of the introduction accelerator than a concentration of the introduction accelerator in the first raw solution, and higher concentration of the monomer component than a concentration of the monomer component in the first raw solution; and bringing the microporous film, brought into contact with the first raw solution in the step (1a), into contact with the second raw solution.

6. The method as set forth in the above 4., wherein the introduction method further comprises the step (1 b') of preparing a plurality of raw solutions including a mixed solution of the introduction accelerator and a solution of the monomer component and the cross-linking agent, in which each concentration of the introduction accelerator in the raw solutions is sequentially lower than the concentration of the introduction accelerator in the first raw solution and each concentration of the monomer component in the raw solutions is sequentially higher than the concentration of the monomer component in the first raw solution; and sequentially bringing the microporous film, brought into contact with the first raw solution in the step (1a), into contact with the respective raw solutions in descending order according to a concentration of the introduction accelerator in raw solution.

7. The introduction accelerator may properly be selected from any water-soluble organic solvent having permeability to the microporous film depending on a type of the microporous film used. In view of solubility to water, a water-soluble organic solvent having permittivity of 15 or more is preferable, and it is particularly preferable to use acetone, methanol, ethanol, propanol and butanol.

8, Also, an amount of the introduction accelerator in the first raw solution depends on a type of the microporous film or a type of the introduction accelerator, and is preferably 1 to 200 parts by mass per 100 parts by mass of a total amount of the monomer component and cross-linking agent.

9. A separation membrane for a solid polymer type fuel cell including the anion-exchange membrane as set forth in the above 1. or 2.

10. An ion-exchange membrane/gas diffusion electrode assembly (MEA) for a solid polymer type fuel cell wherein gas diffusion electrodes are bonded to both surfaces of the separation membrane for a solid polymer type fuel cell as set forth in the above 9.

11. A solid polymer type fuel cell wherein the ion-exchange membrane /gas diffusion electrode assembly (MEA) for a solid polymer type fuel cell as set forth in the above 10 is installed.

## EFFECTS OF THE INVENTION

The anion-exchange membrane of the above 1. and 2. of the present invention is excellent in alkaline resistance, particularly alkaline resistance at high temperature. Particularly for the anion-exchange membrane of the above 2. of the present invention, since a quaternary ammonium salt behaving as an anion-exchange group is also present in the cross-linking site, high ion-exchange capacity and high hydroxide ion conductivity are achievable.

According to the above methods 3. to 6., it is possible to efficiently produce the anion-exchange membrane of the present invention having the above-mentioned excellent characteristics.

The fuel cell of the above 9. using the anion-exchange membrane of the above 1. and/or 2. of the present invention is hardly lowered in performance and has high durability at high temperature where catalyst activity becomes higher (i.e. high output is obtainable) even when it is operated for a long time. In addition, the above problems (i) to (iii), which have been problems in a fuel cell using a cation-exchange membrane, are avoidable in the above fuel cell.

## MODES FOR WORKING THE INVENTION

### I. Anion-Exchange Membrane of the Present Invention

#### (Microporous Film of Resin Insoluble in Water)

The ion-exchange membrane of the present invention comprises a microporous film of resin insoluble in water and a specific anion-exchange resin for filling a void of the microporous film.

The above microporous film is a base material of an anion-exchange membrane, has a function to retain the anion-exchange resin, determine a basic form of the membrane, and further provides mechanical strength and flexibility to the anion-exchange membrane. For the microporous film, those made of resin insoluble in water is used in view of

durability in usage environment. For the resin to be a material for the microporous film, any known resin is usable as far as the resin is not soluble in water, and in view of durability and ease of availability, thermal plastic resin such as polyolefin resin, vinyl chloride-based resin, fluorinated resin, polyamide resin and polyimide resin can preferably be used. Specific examples for preferably-usable resin in the present invention may include as follows.

polyolefin resin: homopolymer or copolymer of α-olefin such as ethylene, propylene, 1-butene, 1-pentene, 1-hexene, 3-rnethyl-1-butene, 4-methyl-1-pentene and 5-methyl-1-heptene, etc.;
vinyl chloride-based resin: polyvinyl chloride, vinyl chloride-vinyl acetate copolymer, vinyl chloride-vinylidene chloride copolymer, vinyl chloride-olefin copolymer and the like;
fluorinated resin: polytetrafluoroethylene, polychlorotrifluoroethylene, polyvinylidene fluoride, tetrafluoroethylene-hexafluoropropylene copolymer, tetrafluoroathylene-perfluoroallcyl vinyl ether copolymer, tetrafluoroethylene-ethylene copolymer and the like; and
polyamide resin: nylon 6, nylon 66, etc.

Among these, because of excellent mechanical strength, chemical stability and chemical resistance, and ease of reduction in membrane resistance caused by making the membrane thinner, polyolefin resin, particularly polyethylene or polypropylene resin, is particularly preferably used, and polyethylene resin is most preferable.

Pores or voids of the microporous film is necessary for retaining the anion-exchange resin, and the microporous film has a plurality of pores or voids perforating through its surface to the reverse side. The form of the microporous film is not particularly limited, and a microporous film, obtained by a method comprising steps of forming a film, in which soluble polymers are dispersed, and selectively dissolving and removing the soluble polymers or a method comprising steps of forming a film, in which microfiller of anorganic substance and organic substance is filled, followed by stretching the film, and if necessary, removing the filler, etc., can be used as well as woven fabric and unwoven fabric.

An average pore diameter (may simply be referred to as micropore diameter) of the pore of the microporous film is preferably 0.01 to 2 μm, particularly preferably 0.015 to 0.4 μm. When the micropore diameter is less than 0.01 μm, electric resistance of the obtained separation membrane may tend to increase as a result of reduced amount of the resin filled therein. Also, when the micropore diameter exceeds 2 μm, strength of the obtained separation membrane may tend to decrease. Also, a void ratio (may also be referred to as porosity) in the microporous film defined as a rate of void portion, formed by the pores in a volume (apparent volume) of the entire film, per total volume is preferably 20 to 95%, more preferably 30 to 90%. Furthermore, air permeability by JIS P-8117 is preferably 1500 seconds or less, more preferably 1000 seconds or less. The air permeability within the range allows reducing electric resistance when the film is used as a separation membrane for a fuel cell, and retaining high physical strength.

Thickness of the microporous film is in general 5 to 150 μm, and in view of balanced electric resistance and strength when used as a separation membrane for a fuel cell, preferably 10 to 120 μm, particularly preferably 10 to 70 μm and most preferably 15 to 50 μm.

As a microporous film preferably used in the present invention, for example, there may be mentioned a microporous film obtained by the method disclosed in Japanese Unexamined Patent Publication No. H9-216964 or Japanese Unexamined Patent Publication No. 2002-338721, "Hipore" of Asahi Kasei Chemicals Corporation, "Upore" of Ube Industries, Ltd., "Setela" of Tonen-Tapils Co., Ltd., "Expole" ofNitto Denko Corporation, "Hilet" of Mitsui Chemical Inc., etc.

(Anion-Exchange Resin)

In the anion-exchange membrane of the present invention, the void of the microporous film is filled with anion-exchange resin of a cross-linked polymer having an anion-exchange group expressed by the following formula (1). In this context, the "void" is formed by the pores of the microporous film, and to "fill" indicates to fill up to cover in the pores perforating the front and back of the membrane. The anion-exchange resin is not particularly limited in its existence form as far as it covers in the pores. For example, the resin may be filled up a part of the pores in the entire or a part of the membrane, and also exist to pour out of the pores and to cover the front and back of the membrane.

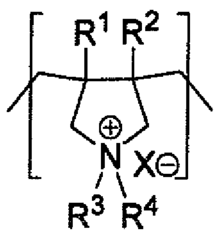

(1)

In the above formula (1), each of $R^1$, $R^2$, $R^3$ and $R^4$ independently indicates any one of a hydrogen atom, a halogen atom and an alkyl group having carbon number of 1 to 10. When the molecule weight per structure expressed by the formula (1) is smaller, the number of the anion-exchange groups per unit weight of the entire anion-exchange resin can be increased to increase anion-exchange capacity, so that smaller $R^1$ and $R^2$ are preferable. Namely, it is preferable that $R^1$ and $R^2$ are mutually independently a hydrogen atom, halogen atom, methyl group or ethyl group, and it is most preferable that the both is a hydrogen atom, On the other hand, $R^3$ and $R^4$ are, in view of balanced chemical stability and anion-exchange capacity in alkaline atmosphere, preferably an alkyl group having carbon number of 1 to 6, particularly preferably an alkyl group having carbon number of 1 to 3. Also, $R^3$ and $R^4$ may mutually be coupled to form a ring-like structure, and particularly, 3,3,5,5-tetramethyl piperidinium backbone is more preferable because Hofmann elimination reaction of a salt of quaternary ammonium hydroxide can be inhibited due to its structure without β-hydrogen.

X" in the above formula (1) indicates a halide ion, a hydroxide ion or an anion of organic acid or inorganic acid. When the anion-exchange membrane of the present invention is used for the practical application, the anion is generally ion-exchanged if required before using the anion-exchange membrane. Therefore, $X^-$ is not particularly limited as far as it does not interfere with the ion-exchange, and in view of ease of the ion-exchange, a halide ion, hydroxide ion and anion of organic acid are preferable. As the halide ion, a fluoride ion, chloride ion, bromide ion and iodide ion may be exemplified, and chloride ion and bromide ion are preferable because of high ion-exchange performance. Also, as the anion of organic acid, a carbonate ion, bicarbonate ion, oxalate ion, acetate ion, succinate ion, phthalate ion and the like may be exemplified, and carbonate ion, bicarbonate ion, oxalate ion and acetate ion are preferable because ion-exchange is generally easier for an anion having smaller molecule weight.

Note that the above anion-exchange resin can be obtained by polymerizing and crosslinking a monomeric composition including a monomer component, containing a diallyl ammonium salt, and a cross-linking agent as will hereinafter be described. The anion-exchange group having a five-membered ring structure (pyrrolidine structure) expressed by the above formula (1) can be formed when the monomer component containing a diallyl ammonium salt is polymerized, but through the polymerization, another anion-exchange group having a 6-membered ring structure (piperidine structure) can also be formed in addition to the anion-exchange group expressed by the above formula (1) due to its reaction mechanism. Such an anion-exchange group is also expected to be equivalent in alkaline resistance and heat resistance to the anion-exchange group expressed by the above formula. Therefore, the anion-exchange resin may also include such an anion-exchange group.

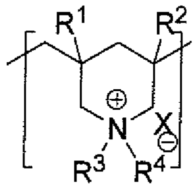

The structure of the cross-linked polymer constituting the anion-exchange resin is not particularly limited as far as it has the above anion-exchange group and crosslink structure. For the structure of its cross-linking site, any structure can be selected as far as it allows mutually cross-linking methylene backbones of the polymer having the anion-exchange group expressed by the above formula by covalent bonding. However, because of high polymerizability and chemical stability, as well as a divinylbenzene-derived crosslink structure, a crosslink structure derived from a cross-linking agent comprised of a compound having two diallyl amino groups within a molecule in the above mentioned Japanese Unexamined Patent Publication No. 2001-302729, a crosslink structure expressed by the formula (7) in the paragraph 0018 of the above mentioned Japanese Unexamined Patent Publication No. 2009-143975, a bicyclic crosslink structure obtained when a tetraallyl ammonium salt having four allyl groups within one molecule is used as a cross-linking agent, etc. may be preferable. Although the degree of cross-linking can be declined, the bicyclic crosslink structure is preferable because its cross-linking site also has an anion-exchange group as shown in the following formula (2)'. Also, in case of a structure of the following formula (2), the degree of cross-linking may not be declined, and its cross-linking site has an anion-exchange group as well, resulting in retaining high exchange capacity and showing excellent ion conductivity. Therefore, the most preferable crosslink structure is the structure expressed by the following formula (2).

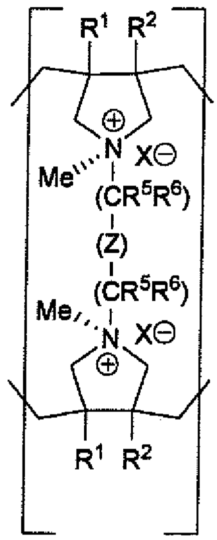

(2)

or

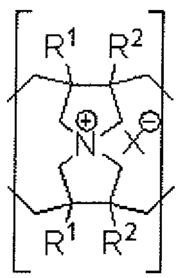

(2)'

Note that $R^1$, $R^2$ and $X^-$ are respectively the same as the $R^1$, $R^2$ and $X^-$ in the above formula (1); and $R^5$ and $R^6$ are mutually independently a hydrogen atom, a halogen atom, an alkyl group, or a hydroxyl group; in the above formula (2) and (2)'. For any of $R^1$, $R^2$, $R^5$ and $R^6$ in the above formula (2), the hydrogen atom, which hardly causes to decrease the polymerization rate due to steric barrier, is most preferable in view of ease of polymerization reaction for producing the anion-exchange resin (cross-linked polymer).

Z in the above formula (2) indicates a group expressed by the following formula (where n1 is an integer of 0 to 10, and each of n2, n3, n4, n5 and n6 is independently an integer of 1 to 10).

$-(CH_2)n_1-$, -NH-, $-N(CH_3)-$,

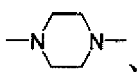,

$-NH-(CH_2)_3-NH-$, $-NH-(CH_2)_4-NH-$, -O-, $-(CH_2)_{n2}-O-(CH_2)_{n3}-$, $-O-(CH_2)_{n4}-O-$. $-O-(CH_2)_{n5}-(O-CH_2-CH_2)_{n6}-O-$

Z is not particularly limited as far as it is selected from those having the above-mentioned structure, and is preferably $-(CH_2)_{n2}-$ or $-(CH_2)_{n2}-O-(CH_2)_{n3}-$, most preferably $-(CH_2)_{n1}-$, in view of durability in alkali atmosphere. Also, in each group, n1 representing ethylene chain length is an integer of 0 to 10, and n2 to n6 are respectively independently integer of 1 to 10. When the ethylene chain length exceeds 10 and is too long, it may cause problems such that the crosslink structure cannot sufficiently be formed because solubility to a solvent for preparing a monomer solution may be declined to precipitate during the after-mentioned polymerization. Note that when Z is $-(CH_2)_{n1}-$, n1 is particularly preferably an integer of 1 to 6 in view of ion conductivity of the membrane.

In the anion-exchange resin (cross-linked polymer) used for the anion-exchange membrane of the present invention, the following combination is most preferable as a combination of the crosslink structure and the anion-exchange group in view of ease of production, stability and ion conductivity. Note that the following structure shows a repeated unit of the cross-linked polymer, but the structure is a particularly preferable repeated unit by way of example, and an amount of the anion-exchange groups included per unit, i.e. a molar ratio of a unit ofbis(N-methyl-pynolidinium) butane backbone structure as the cross-linking site, a unit of N,N-dimethyl-pyrrolidinium backbone structure as the anion-exchange group, is not limited to 2. The above molar ratio is preferably 1:99 to 70:30, particularly preferably 2:98 to 40:60.
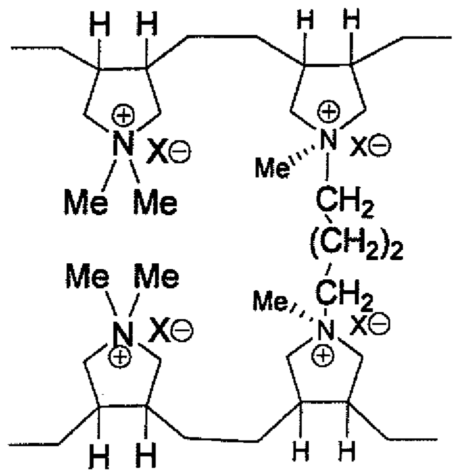

Content of the above anion-exchange resin in the anion-exchange membrane of the present invention may differs according to the type of the used microporous film, and cannot be completely determined, but is usually in the range of 10 to 90 parts by mass, preferably in the range of 20 to 70 parts by mass, per 100 parts by mass of the microporous film.
For the anion-exchange membrane of the present invention, as well as conventional anion-exchange membranes, properties such as anion exchange capacity, liquid fuel permeability, and electric resistance and water content ratio of the membrane can be controlled according to the quality of material, micropore diameter and void ratio of the microporous film to be a base material, and type and content of the anion-exchange resin, etc. For example, for the anion exchange capacity, it is possible to obtain high values of normally 0.1 to 3 mmol/g, particularly 0.3 to 2.5mmol/g, according to common measurement method. Also, the water content ratio can normally be 5 to 90%, more preferably 10 to 80%, and it is possible to hardly cause the increase in electric resistance due to drying, i.e. reduction in ion conductivity. The membrane resistance can greatly be reduced to 0.40 $\Omega \cdot cm^2$ or less, further to 0.25 $\Omega \cdot cm^2$ or less, expressed as a value measured by the method in the after-mentioned Examples.
For the anion-exchange membrane of the present invention, the above particular anion-exchange resin is used, so that it has high alkaline resistance compared to the conventional anion-exchange membrane using an anion-exchange resin in which a quaternary ammonium salt group is directly combined to the carbon at benzyl position of an aromatic ring. For example, anion-exchange capacity retention rate after keeping in an aqueous solution having ethanol content of 12 mass% and potassium hydroxide concentration of 10 mass% at a high temperature of 80°C for 500 hours is 90% or more, preferably 95% or more. Although there is a correlation between the anion-exchange capacity and the ion conductivity of the anion-exchange membrane or output when used in a fuel cell, the relation is not always directly proportional, and even when change in the anion-exchange capacity is relatively small, the above conductivity or output may greatly be influenced, so that it is significant that the anion-exchange capacity is stably maintained for a long time. Since the anion-exchange membrane of the present invention shows high alkaline resistance as mentioned above, the performance is hardly decreased and the fuel cell can stably be used for a long time in case that the anion-exchange membrane of the present invention is used to make a direct liquid fuel type fuel cell, even when the fuel is added with alkali such as potassium hydroxide for further improving reaction activity, and the fuel cell is used under high temperature conditions for further obtaining high output.

II. Method for Producing an Anion-Exchange Membrane of the Present Invention

The anion-exchange membrane of the present invention can preferably be produced by a method comprising the following steps (1) and (2):

(1) introducing a monomeric composition comprising a monomer component, including a diallyl ammonium salt, and a cross-linking agent in a void of a microporous film of resin insoluble in water, and
(2) polymerizing and crosslinking the monomeric composition introduced in the void portion of the microporous film.

The anion-exchange resin used for the anion-exchange membrane of the present invention can be obtained by polymerizing and crosslinking the monomeric composition comprising the monomer component, containing a diallyl ammonium salt, and a cross-linking agent. In the method of the present invention, the above monomeric composition is introduced in the void of the microporous film of resin insoluble in water, followed by polymerization and crosslinking, which results in forming a complex of the microporous film and the anion-exchange resin to form the anion-exchange membrane of the present invention. Hereinafter, a variety of materials and a polymerization method, etc., used in the above method of the present invention will be explained in detail.

(Monomer Component)

The monomer component used in the method of the present invention contains a diallyl ammonium salt. The "diallyl ammonium salt" here means a quaternized ammonium salt having two allylic double bonds as a polymerizable group in its molecule. The diallyl ammonium salt behaves as a polymerizable monomer, and it is preferable in the present invention to use an ammonium salt expressed by the following formula (3) as the diallyl ammonium salt in view of polymerizability and ease of availability.
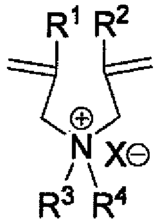

(3)

In the above formula (3), $R^1$, $R^2$, $R^3$, $R^4$ and $X^-$ are respectively the same as the $R^1$, $R^2$, $R^3$, $R^4$ and $X^-$ in the above formula (1).
Specific examples of the ammonium salt expressed by the above formula (3) preferably usable in the present invention may include diallyldimethyl ammonium chloride, diallyldiethyl ammonium chloride, diallylethylmethyl ammonium chloride, and those in which counter anions of the above quaternized ammonium salts are substituted with iodine ion or bromine ion., etc. Also, a diallyl pyrrolidinium salt, diallyl piperidinium salt and the like, in which $R^3$ and $R^4$ are coupled to form a ring can preferably be used, and in particular, 1,1-dialiyl-3,3,4,4-tetramethyl pyrrolidinium salt, 1,1-diallyl-3,3,5,5-tetramethyl piperidinium salt and the like, which have a structure without β-hydrogen, can particularly preferably be used for inhibiting Hofmann elimination of hydroxide salt. These can be used alone, or in mixture of a plurality of different types.
The monomer component used in the present invention may consist only of the diallyl ammonium salt, but may include other polymerizable monomers for the purpose of improving the flexibility of the anion-exchange membrane, providing hydrophobicity, etc. Examples of these other polymerizable monomers may include styrene, acrylonitrile, methyl styrene, acrolein, methyl vinyl ketone, vinyl biphenyl, etc.
Note that the lowered rate of the diallyl ammonium salt may cause to reduce the anion exchange capacity to extremely increase membrane resistance of the obtained anion-exchange membrane when the above polymerizable monomers are included as the monomer component, so that the rate of the diallyl ammonium salt in the monomer component is 60 mass% or more, particularly preferably 95 mass% or more.

(Cross-Linking Agent)

The cross-linking agent used in the method of the present invention is not particularly limited as far as it is any compound having a function to crosslink the above monomer component or polymer thereof, and in view of solubility to the solvent for dissolving the above monomer component, it is preferable to use a compound having two diallyl amino groups within a molecule or, a compound in which two amino groups of the above compound are converted to a quaternized ammonium salt. Also, in view of its high anion-exchange capacity, the latter compound is particularly preferably used. Also, the tetraallyl ammonium salt having four allyl groups in its molecule is useful as the cross-linking agent with

the lowest molecule weight while it may produce a bicyclic compound at polymerization to decline the degree of cross-linking.

Specific examples of the compound having two diallyl amino groups within a molecule may include the compound expressed by the formula (5) in Japanese Unexamined Patent Publication No. 2001-302729. Also, as the compound in which two amino groups of the compound having two diallyl amino groups within a molecule is converted to a quaternized ammonium salt, it is particularly preferable to use the compound expressed by the following formula (4) in view of polymerizability.

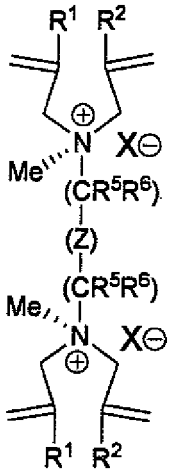

(4)

Note that $R^1$, $R^2$, $R^5$, $R^6$, Z and $X^-$ in the above formula (4) are respectively the same as those in the above formula (2).

Note that in view of durability of the obtained anion-exchange resin in alkali atmosphere, Z is preferably $-(CH_2)_{n1}-$, or $-(CH_2)_{n2}-O-(CH_2)_{n3}-$, particularly preferably $-(CH_2)_{n1}-$. In this case, n1 is an integer of preferably 1 to 10, particularly preferably 1 to 6, in view of solubility to the solvent and stability of the salt.

Specific examples of the compound expressed in the above formula (4) preferably used in the present invention may include N,N,N',N'-tetraallyl-N,N'-dimethylpropane diammonium dichloride, N,N,N',N'-tetraallyl-N,N'-dimethyl butane diammonium dichloride, N,N,N',N'-tetraallyl-N,N'-dimethyl hexane diammonium dichloride, N,N,N',N'-tetraallyl-N, N'-di.methyl heptane diammonium dichloride, N,N,N',N'-tetraallyl-N,N'-dimethyl octane diammonium dichloride, bis-(N, N-tetraallyl-N-methyl ammonium ethyl) ether dichloride, bis- (N,N-tetraallyl-N-methyl ammonium propyl) ether dichloride, bis-(N,N-tetraallyl-N-methyl ammonium butyl) ether dichloride and those having counter anions of the quaternized ammonium salts substituted with iodine ion or bromine ion, etc. These can be used alone, or in mixture of a plurality of different types.

The compound expressed by the above formula (4) can be obtained by, for example, mixing diallyl methyl amine and dihaloalkane in an organic solvent such as toluene to have a ratio of molar number such that the number of moles of the diallyl methyl amine is twice or more of the dihaloalkane, and heating for reaction, followed by washing and distilling away the solvent.

(Monomeric Composition)

The monomeric composition used in the present invention includes the above monomer component and cross-linking agent. The ratio of the amounts of the monomer component and the cross-linking agent in the monomeric composition may be selected preferably in the range of 1:99 to 70:30, more preferably in the range of 2:98 to 40:60, in terms of (the cross-linking agent):(the monomer component) (in molar ratio), because the obtained anion-exchange resin has sufficient crosslink density not to elute in usage environment and has high ion conductivity.

The above monomeric composition preferably includes a polymerization initiator. The polymerization initiator may properly be determine from any known polymerization initiators such as organic peroxide and azo-based compound depending on the constitution of the monomer component and the type of the cross-linking agent. Persulfate salt, such as ammonium persulfate and potassium persulfate, and water-soluble azo-based compound can preferably be used in view of compatibility to the salt, i.e. the monomer. An amount of the polymerization initiator is not particularly limited as far as it is sufficient to initiate polymerization reaction of the monomeric composition. In general, 1 to 50 parts by mass to 100 parts by mass of the total amount of the monomer component and cross-linking agent may be sufficient, and 2

to 30 parts by mass is preferable.

It is preferable to use the above monomeric composition as a solution because respective constituents can uniformly be mixed. The solvent in this case is not particularly limited as far as it is inactive to the monomer component, the cross-linking agent and the polymerization initiator added if needed, and able to dissolve all of these. As the preferably used solvent, there may be exemplified, toluene, dimethyl formamide, dimethyl sulfoxide, methanol, ethanol, propanol, butanol, water, ethyl acetate, tetrahydrofuran, acetonitrile, chloroform, acetone, etc.

Note that both of the main component of the monomer and the cross-linking agent is a quaternized ammonium salt when the compound expressed by the above formula (4) is used as the cross-linking agent, and therefore, it is preferable to use water, water-soluble organic solvent or mixed solvent thereof as the solvent, which have high solubility to these and hardly cause precipitation of these components during polymerization. Also, in view of ease of introduction when the monomeric composition is introduced in the void portion of the microporous film, it is most preferable to use the introduction accelerator which is an organic solvent having permeability to the above microporous film and water-miscible property, or a mixed solvent of a polar organic solvent other than the introduction accelerator or water with the introduction accelerator.

The above introduction accelerator here may properly be selected from any water-soluble organic solvent having permeability to the microporous film depending on the type of the used microporous film. Having permeability to the microporous film indicates, in this context, that the solvent can easily wet the microporous film, and easily penetrate in the void (i.e. moves to the opposite side through the pores) without being repelled when the solvent is brought into contact with the film, for example. Particularly when polyolefin resin is used for the above microporous film, it tends to be easily wetted by the organic solvent having low permittivity. However, the organic solvent having low permittivity is low in affinity with the mixed solution. Because of these, the above introduction accelerator is preferably water-soluble organic solvent having permittivity of 15 or more, and acetone, methanol, ethanol, propanol and butanol can preferably be used. Alcohols can further preferably be used for the reason that viscosity of the solution can easily be maintained to the viscosity easy to be handled, and that it exists in the reaction field during the polymerization to give proper water retentivity to the polymer. Furthermore, among the alcohols, methanol, ethanol, propanol or butanol can preferably used as the introduction accelerator because it can easily be removed from the anion-exchange membrane by a method such as substitution after the after-mentioned polymerization.

In the present invention, the solvent of the monomeric composition may also work as the introduction accelerator. Although it depends on the quality of material of the microporous film, acetone, methanol, ethanol, propanol and butanol have functions as the solvent and the introduction accelerator. When those having a function as the introduction accelerator is used as the solvent, the introduction accelerator may not be necessary to separately be added, or may be added. When it has the function as the introduction accelerator as well, used amount of the after-mentioned introduction accelerator is the total amount of the solvent having the function as the introduction accelerator and other introduction accelerator added if needed.

When the monomeric composition is used as a solution, used amount of the solvent is not particularly limited as far as it is an amount able to dissolve the above monomer component and cross-linking agent. The amount is normally 10 to 1000 parts by mass per 100 parts by mass of total mass of the above monomer component and cross-linking agent, and because exchange capacity of the obtained anion-exchange membrane can be increased, this is preferably in the range of 20 to 200 parts by mass.

Note that viscosity of the above solution of the monomeric composition is, in view of ease of introduction when the monomeric composition is introduced in the void portion of the microporous film, preferably in the range of 0.001 to 1 Pa·s, more preferably in the range of 0.001 to 0.1 Pa as a value of steady viscosity at 25°C measured by B-type rotational viscometer.

(Introduction of Monomeric Composition into Void of Microporous Film)

In the production method of the present invention, the above monomeric composition is introduced into void of the above microporous film in the step (1). For obtaining the uniform anion-exchange membrane, the above monomeric composition is preferably introduced into the void of the microporous film in a homogeneous mixture, and it is preferable to be introduced in the form of a homogeneous solution for this purpose. The main component of the monomeric composition can be a salt in the preferable form, so that it is most preferable to use an aqueous solution for obtaining the homogeneous solution. However, since water-insoluble resin is hardly wetted by water, it is difficult to introduce the aqueous solution into void of such a microporous resin film. For example, as the method for forcibly introducing the aqueous solution of the monomeric composition into the void portion of the porous film, there may be a method in which void portion of the porous film is first made into vacuum state or other state close thereto by pressure reduction and deaeration followed by bringing into contact with the aqueous solution, etc., but this method is not practical because in the method including pressure reduction and deaeration, the handling is complicated, long period of time is necessary for filling, and continuous handling is difficult due to requirements on special equipments such as vacuum state chamber.

Therefore, in the method of the present invention, for the reason of easy handling and efficient introduction of the above monomeric composition into the void of the above microporous film, introduction of the above monomeric composition into the void of the above microporous film in the above step (1) is preferably performed by an introduction method comprising the step (1a) of preparing a first raw solution having permeability to the microporous film which is obtained by obtained by dissolving the monomer component and the cross-linking agent in an introduction accelerator which is an organic solvent having permeability to the microporous film and water-miscible property, or a mixed solvent of a polar organic solvent except for the introduction accelerator or water and the introduction accelerator; and bringing the microporous film into contact with the first raw solution.
In this case, used amount of the above introduction accelerator in the above first raw solution depends on the type of the above microporous film, and may preferably be 1 to 200 parts by mass per 100 parts by mass of the total amount of the above monomer component and cross-linking agent. When the amount is less than 1 part by mass, the mixed solution may hardly wet the above microporous film, and when it exceeds 200 parts by mass, the rate of the monomer component and cross-linking agent in the mixed solution may be lowered to result in lowered exchange capacity of the obtained anion-exchange membrane.
Also, the preferable used amount of the introduction accelerator in the above first raw solution differs according to the type of the introduction accelerator. For example, when the introduction accelerator is methanol, this is normally, 60 to 200 parts by mass, preferably 80 to 120 parts by mass, per 100 parts by mass of the total amount of the above monomer component and cross-linking agent; in case of ethanol, this is normally 40 to 100 parts by mass, preferably 50 to 90 parts by mass, on the same basis; and in case of butanol, this is normally 1 to 50 parts by mass, preferably 2 to 20 parts by mass, on the same basis.
Also, for the reason that high concentration of the monomeric composition can more efficiently be introduced into the void, it is preferable that the above introduction method further comprises the following step (1b) or (1b') in addition to the above step (1a):

step (1b): preparing a second raw solution including a mixed solution of the introduction accelerator and a solution of the monomer component and cross-linking agent, the mixed solution having lower concentration of the introduction accelerator than a concentration of the introduction accelerator in the first raw solution, and higher concentration of the monomer component than a concentration of the monomer in the first raw solution; and bringing the microporous film, brought into contact with the first raw solution in the step (1a), into contact with the second raw solution;
steps (1b'): preparing a plurality of raw solutions including a mixed solution of the introduction accelerator and a solution of the monomer component and cross-linking agent, in which each concentration of the introduction accelerator in the raw solutions is sequentially lower than the concentration of the introduction accelerator in the first raw solution and each concentration of the monomer component in the raw solutions is sequentially higher than the concentration of the monomer component in the first raw solution; and sequentially bringing the, microporous film, brought into contact with the first raw solution in the step (1a) into contact with the respective raw solutions in descending order according to a concentration of the introduction accelerator in the raw solution.

For example, when using the monomeric composition in which the main component of its solute is a salt, a concentration of the solute can be increased as the rate of water in the solvent is increased. On the other hand, the permeability to the porous film may be increased with lower rate of water in the solvent and higher rate of the introduction accelerator. Therefore, when using only the first raw solution having high permeability, it is difficult to increase the amount of the solute component introduced into the void portion, but when employing the method including the step (1b) or (1b'), it is possible to introduce more solute component into the void portion by substituting the solution introduced into the void portion with another raw solution having higher solute concentration. Namely, by employing such a method, the monomeric composition can easily and securely be introduced into the void of the microporous film, and as a result, an anion-exchange membrane with high-quality and high ion-exchange capacity (i.e. high ionic conductivity) can be obtained. In this case, when each raw solution to be brought into contact with the microporous film in the step (1 b) or (1b') is called as "the nth raw solution (where "n" is a natural number)" according to the order to be brought into contact, the amount of the introduction accelerator in the corresponding nth raw solution (expressed by parts by mass per 100 parts by mass of total amount of the monomer component and cross-linking agent; hereinafter may be abbreviated to "$Q_n$") is preferably 0.9 to 0.2, particularly preferably 0.8 to 0.4, in terms of a ratio ($Q_n/Q_{n-1}$) thereof to the amount of the introduction accelerator in "the (n-1)th raw solution" (expressed by parts by mass per 100 parts by mass of total amount of the monomer component and cross-linking agent; hereinafter may be abbreviated to "$Q_{n-1}$") previously brought into contact with the microporous film. Note that in the step (1b), when the amount $Q_1$ of the introduction accelerator in the first raw solution is 60 to 1 parts by mass, $Q_2$ may be 0 part by mass, and $Q_2/Q_1$ is preferably 0.5 to 0. Also, in the steps (1b'), in view of efficiency, it is preferable that the number of a plurality of raw solutions to be prepared is 2 to 5, particularly 2 or 3. The last raw solution may not include the introduction accelerator ($Q_n$= 0 part by mass), and $Q_n/Q_{n-1}$ is preferably 0.5 to 0.

(Polymerization and Crosslinking)

In the method of the present invention, the monomeric composition introduced into the void portion of the porous film through the step (1) is subjected to polymerization and crosslinking. In this case, the polymerization/crosslinking method is not particularly limited, and may properly be selected from known methods such as radical polymerization and ion polymerization, depending on the constitution of the monomer component used, the type of the cross-linking agent and the type of a polymerization initiator. In general, the radical polymerization is preferably used because of easy control. For example, when using a radical polymerization initiator including persulfate salt such as persulfate ammonium and persulfate potassium, and water-soluble azo-based compound as the polymerization initiator, a polymerization method with heat (heat polymerization) is commonly employed. In case of the heat polymerization, polymerization temperature is not particularly limited, and generally 30 to 120°C, preferably 40 to 100°C. Polymerization time is preferably 10 minutes to 10 hours.

Note that it is preferable to polymerize the polymerizable composition after covering the same with a film of polyester and the like for preventing inhibition of polymerization due to oxygen and for obtaining surface smoothness when the radical polymerization is conducted. By covering the polymerizable composition with a film, it is possible to obtain an anion-exchange membrane, uniform and thin in thickness (meaning the thickness is as thin as the thickness of the microporous film which is a base material and not too thick).

The thickness of the anion-exchange membrane is preferably thinner because the membrane resistance can be reduced when it is used as an ion-exchange membrane for a solid polymer type fuel cell, and is preferably as same as, or thicker by 0.5 to 20 μm, particularly 1 to 10 μm, than the thickness of the microporous film used as a base material. The thickness is preferably 10.5 to 140 μm, particularly preferably 11 to 80 μm, most preferably 16 to 60 μm in view of a balance between electric resistance and strength when it is used as a separation membrane for a fuel cell. Also, for the uniformity in thickness, all of measurement values, obtained by measuring membrane thickness for any 10 points in an area except for its outer edge by using a film thickness meter (e.g. Digimatic Indicator by Mitutoyo Corporation) for the dried or wet anion-exchange membrane, are preferably within the range of ±5 μm, particularly preferably within the range of ±2 μm, on the basis of an average thickness of these 10 measurement values.

Thus-produced anion-exchange membrane is subjected to washing, further conversion of the anion type, $X^-$, cutting and the like, if necessary, and can be used as an ion-exchange membrane for a solid polymer type fuel cell according to common practice.

For the counter anion of the quaternary ammonium group, $X^-$, the counter anion of the anion-exchange membrane obtained by the above-mentioned method is normally a halide ion. When the anion-exchange membrane of the present invention is used as a hydroxide ion conductive type separation membrane for a fuel cell, the counterion is preferably ion-exchanged to a hydroxide ion in view of acceleration of high output of the fuel cell.

Note that according to the findings obtained from the study of the present inventors, the counterion is rapidly ion-exchanged to a carbonate ion and/or bicarbonate ion due to absorption of carbon dioxide by being left in air even in an anion-exchange membrane in which its counterion is once ion-exchanged to a hydroxide ion. Furthermore, due to electric generation by using the anion-exchange membrane as a fuel cell separation membrane, the carbonate ion and/or bicarbonate ion is ion-exchanged by a hydroxide ion generated in catalyst reaction in the oxidizing agent chamber side gas diffusion electrode to be released as carbon dioxide from the fuel chamber side. Therefore, even an anion-exchange membrane in which a part or whole of the counterion species is carbonate ion and/or bicarbonate ion can function well as a fuel cell separation membrane. For the above reasons, it is preferable in the present invention that the counterion of thus-obtained anion-exchange membrane is ion-exchanged to carbonate ion and/or bicarbonate ion, further to a mixture thereof, as well as hydroxide ion, in view of easily obtained high output of the fuel cell.

As a method for ion-exchanging the counterion of the quaternary ammonium group to a hydroxide ion, carbonate ion and/or bicarbonate ion, a method in which the above anion-exchange membrane is immersed in an alkali hydroxide aqueous solution such as sodium hydroxide aqueous solution and potassium hydroxide aqueous solution, or an aqueous solution of carbonate salts such as sodium carbonate, potassium carbonate, sodium bicarbonate and potassium bicarbonate can normally be employed. In this case, the concentration of the alkali hydroxide aqueous solution and aqueous solution of carbonate salts is not particularly limited, and may be 0.1 to 2 $mol \cdot L^{-1}$ or so, the immersion temperature is 5 to 60°C, and the immersion time is approximately 0.5 to 24 hours.

III. Ion-Exchange Membrane-Gas Diffusion Electrode Assembly (MEA) for a Solid Polymer Type Fuel Cell

For using the anion-exchange membrane of the present invention for a fuel cell, the anion-exchange membrane of the present invention may normally be used as a separation membrane for a fuel cell, and a fuel chamber side gas diffusion electrode and an oxidizing agent chamber side gas diffusion electrode are respectively bonded to both surfaces thereof to form an electrolyte membrane-electrode assembly. Such an electrolyte membrane-electrode assembly can preferably be produced by a method comprising the steps of adding a binding agent and dispersion medium if necessary

to the electrode catalyst to form a paste composition, directly shaping the same into a roll or coating the same on a support layer material such as carbon paper followed by heat treatment to obtain a layered product, coating an ion conductivity providing agent on a surface to become a joining surface followed by drying if necessary, and thermal compression bonding with a separation membrane for a fuel cell; or a method comprising the steps of adding an ion conductivity providing agent as well as a binding agent and dispersion medium if necessary to the electrode catalyst to form a paste composition, coating the same on a support layer material such as carbon paper or coating the same on a removable film to transfer onto a separation membrane for a fuel cell or directly coating the same on the separation membrane for a fuel cell, followed by drying, and then thermal compression bonding with the separation membrane for a fuel cell if necessary; etc. Also, as disclosed in Japanese Unexamined Patent Publication No. 2003-86193, after obtaining a shaped material comprising a composition including 2 or more kinds of organic compounds which contact each other to crosslink to form an ion-exchange resin, and an electrode catalyst, the above 2 or more kinds of organic compounds in the shaped material may be cross-linked to form a gas diffusion electrode, and the gas diffusion electrode may be bonded to each of both surfaces of the separation membrane for a fuel cell of the present invention.

Also, as an ion conductivity providing agent, an ion conductivity providing agent for a gas diffusion electrode of a polymer type fuel cell can preferably be used as disclosed in Japanese Unexamined Patent Publication No. 2002-367626, where the ion conductivity providing agent is a hydrocarbon-based polymeric elastomer having an anion-exchange group within its molecule and being hardly soluble in water and methanol, or a solution or suspension thereof.

(Electrode Catalyst)

As the electrode catalyst, any metal particle such as platinum, gold, silver, palladium, iridium, rhodium, ruthenium, tin, iron, cobalt, nickel, molybdenum, tungsten, vanadium or an alloy thereof, accelerating oxidation of hydrogen and reduction of oxygen and being used as an electrode catalyst in the conventional gas diffusion electrode, can be used without limitation, and in view of cost, it is preferable to use a transition metal catalyst. The catalyst may be preliminarily supported by a conductive agent prior to the use. The conductive agent is not particularly limited if it is an electron conductive material, and for example, carbon black such as furnace black and acetylene black, activated carbon, black lead, etc. can be independently used or mixed to use in general.

Note that in the MEA of the present invention, it is preferable to use those active to fuel as the electrode catalyst included in the electrode (fuel chamber side electrode) bonded to one of the surfaces of the separation membrane for a fuel cell, and to use those having lower activity to the fuel than the activity of the electrode catalyst in the above fuel chamber side electrode as the electrode catalyst included in the electrode (oxidizing agent chamber side electrode) bonded to the other surface for preventing reduction in output caused by fuel passing through with water when fuel and water are supplied to the fuel chamber of the fuel cell and the water supplied to fuel chamber is supplied to the oxidizing agent chamber by letting the water permeate the electrolyte membrane-electrode assembly. In this case, the activity to the fuel of the electrode catalyst in the oxidizing agent chamber side electrode is 1/10 or less, particularly preferably 1/100 or less, most preferably 1/1000 or less of the activity to the fuel of the electrode catalyst in the fuel chamber side electrode. The proper catalysts can easily be selected with a simple activity testing for the type of the used fuel.

IV. Solid Polymer Type Fuel Cell

Common fuel cell using the anion-exchange membrane of the present invention as the separation membrane for a fuel cell is a solid polymer type fuel cell having the basic structure in FIG. 1 as mentioned above, i.e. a fuel cell having a fuel chamber and an oxidizing agent chamber divided by an MEA, in which one of electrodes of the above MEA is in the fuel chamber and the oxidizing agent chamber, respectively; fuel is supplied into the fuel chamber to react fuel and hydroxide ion in the electrode in the fuel chamber side; and water and an oxidizing agent are provided to the oxidizing agent chamber to react in the electrode in the oxidizing agent chamber side. However, the use of the anion-exchange membrane of the present invention is not limited to such a fuel cell, and obviously, is also applicable to a fuel cell having any other known structure. As the liquid fuel, methanol is most commonly used, and in addition, ethanol, ethylene glycol, dimethyl ether, hydrazine and the like exert the same excellent effects. These fuels may be supplied to the fuel chamber without modification, and it is preferable to supply in aqueous solution in view of ease of handling and safety.

In the solid polymer type fuel cell of the present invention, the anion-exchange membrane of the present invention having high alkaline resistance is used as a separation membrane for a fuel cell, so that the performance can hardly be lowered to use the fuel stably for a long time even when alkali such as potassium hydroxide is added to fuel and high temperature condition is applied for obtaining high output.

EXAMPLES

Hereinafter, the present invention will be explained further in detail based on examples, and the present invention

is not limited to the examples.

Note that evaluation items and evaluation methods of the anion-exchange membrane and the fuel cell in which the anion-exchange membrane is used as a separation membrane for a fuel cell obtained in examples and comparative examples are as follows.

1) Anion-Exchange Capacity and Water Content Ratio

The anion-exchange membrane was immersed in 0.5 $mol \cdot L^{-1}$-NaCl aqueous solution for 10 hours or more to change it into a chloride ion type, followed by substitution with a nitrate ion type using 0.2 $mol \cdot L^{-1}$-$NaNO_3$ aqueous solution to generate a free chloride ion. The free chloride ion was titrated with silver nitrate aqueous solution by potentiometric titrator (COMTITE-900 by Hiranuma Sangyo Co., Ltd.) (A mol). Next, the same ion-exchange membrane was immersed in 0.5 $mol \cdot L^{-1}$-NaCl aqueous solution at 25°C or less for 4 hours or more, and thoroughly washed by ion exchange water. Then, water on the surface of the membrane was wiped off with tissue paper, etc., and a weight of the wetted membrane (W g) was measured. Furthermore, the membrane was dried at 60°C for 5 hours under reduced pressure to measure the dried weight (D g). Based on the above measurements, ion exchange capacity and water content ratio were obtained by the following formula:

$$\text{Anion-Exchange Capacity} = A \times 1000/D \ [mmol \cdot g^{-1}\text{-dried weight}]$$

$$\text{Water Content Ratio} = 100 \times (W-D)/D \ [\%].$$

2) Membrane Resistance

The anion-exchange membrane prepared by the method described in examples or comparative examples was left undisturbed in air in dry condition for 24 hours or more, and wetted with ion-exchange water at 40°C, followed by cutting to prepare a strip-shaped anion-exchange membrane with a width of 6 cm and a length of 2.0cm. Next, an insulating substrate, on which 5 platinum wires with line width of 0.3 mm were arranged in a linear fashion parallel to a transverse direction (same direction as a transverse direction of the anion-exchange membrane), was prepared and the platinum wire on the insulating substrate was pressed to the above anion-exchange membrane, so that a sample for measurements was prepared.
The insulating substrate on which 5 platinum wires with line width of 0.3 mm were arranged with a predetermined interval, mutually apart and in parallel was used to prepare a sample for measurements by pressing a 2.0 cm-wide strip-shaped anion-exchange membrane wetted with an ion-exchange water at 40°C to the above platinum wires. In this case, the anion-exchange membranes used for measurements, which were obtained in the following examples and comparative examples, were left undisturbed in air in drying condition for 24 hours or more. Also, as a sample for measurements, a plurality of samples was prepared with varied distance between the platinum wires in the range of 0.5 to 2.0 cm.
For each of the above samples for measurements, AC impedance was measured respectively between the first and the second platinum wires (platinum wire interval = 0.5 cm), between the first and the third platinum wires (platinum wire interval = 1.0 cm), between the first and the fourth platinum wires (platinum wire interval =1.5 cm) and between the first and the fifth platinum wires (platinum wire interval = 2.0 cm). From a graph obtained as a result of plotting measured values for each sample with the distance between platinum wires on the x-axis and AC impedance on the γ-axis, the gradient between resistance poles (S) was obtained and also based on the following formula, the membrane resistance (R) was obtained. In this case, AC impedance was measured as AC impedance when 1 kHz of alternating-current was applied between the platinum wires while the sample for measurements was kept in a constant temperature and humidity tank at 40°C with 90% RH to make droplet of ion exchange water generated on the surface of the anion-exchange membrane. Also, membrane thickness (L) of the anion-exchange membrane was measured by Digimatic indicator of Mitutoyo by wetting the anion-exchange membrane with ion exchange water.

$$R = 2.0 \times L^2 \times S$$

R: apparent membrane resistance [$\Omega \cdot cm^2$]

L: membrane thickness [cm]
S: gradient between resistance poles [$\Omega \cdot cm^{-1}$]

Note that the distance between platinum wires and AC impedance bore a linear relation (proportional relation) in the above graph, and that a resistance by contacting between the platinum wire and anion-exchange membrane (contact resistance) in the measured sample was evaluated as γ-intercept, so that it was possible to calculate the gradient between resistance poles (S), meaning a specific resistance of the membrane, from the slope of the graph. In the measurements, the membrane resistance (R) was obtained based on the gradient between resistance poles (S), resulting in eliminating an influence of the above contact resistance.

3) Durability of Anion-Exchange Group

The anion-exchange membrane in which the counterion was converted to hydroxide ion type was cut into 5 cm-square sample. This sample was placed in a polytetrafluoroethylene case, and deterioration test was conducted by retaining this sample within an aqueous solution with ethanol concentration of 12 mass % and potassium hydroxide concentration of 10 mass % in an oven at 80°C for 500 hours.
The anion-exchange capacity after the deterioration test was measured to obtain anion-exchange capacity retention rate, which was a rate of the anion-exchange capacity after the deterioration test to the anion-exchange capacity before the deterioration test. The anion-exchange capacity retention rate was defined as an index of durability.
Also, for examining an influence to fuel cell output due to the deteriorated anion-exchange membrane, a fuel cell using the anion-exchange membrane after the deterioration test as a separation membrane was prepared, the output voltage after the deterioration test was measured by the method according to the following 4).

4) Fuel Cell Output Voltage

An anion-exchange resin (having anion-exchange capacity of 1.4 mmol/g) was prepared by quatemarizing chloromethylated {polystyrene-poly(ethylene-butylene)-polyslyrene} triblock copolymer having molecule weight of 30,000 and styrene content of 30mass % with trimethyl amine, followed by suspension in large excess of 0.5 $mol \cdot L^{-1}$-NaOH aqueous solution to ion-exchange to hydroxide ion. A mixture of 1-propanol solution (resin concentration: 5 mass %) of the anion-exchange resin and carbon black supported 50 mass% of an alloy catalyst of platinum and ruthenium (ruthenium 50 mol%) was coated on carbon paper with water-repellent finish by polytetrafluoroethylene, having a thickness of 100 μm and porosity of 80%, to have 2 $mg \cdot cm^{-2}$ of the catalyst, and dried with reduced pressure at 80°C for 4 hours, so that a fuel chamber side diffusion electrode was produced.
Separately, an oxidizing agent chamber side gas diffusion electrode was prepared by using carbon black supporting 50 mass% of platinum as with the above fuel chamber side diffusion electrode.
Next, the above fuel chamber side diffusion electrode and oxidizing agent chamber side gas diffusion electrode were respectively set on both surfaces of the anion-exchange membrane (separation membrane for a fuel cell) to be measured, which was subjected to hot press at 100°C under pressure of 5 MPa for 100 seconds, and then left undisturbed at room temperature for 2 minutes. The obtained anion-exchange membrane-electrode assembly was left undisturbed in air for 24 hours, and then this was installed in a fuel cell having the structure shown in FIG 1. The fuel cell temperature was set at 50°C, 10 mass % of ethanol aqueous solution containing KOH (KOH concentration of 5 mass %) was supplied to the fuel chamber side, air at atmospheric pressure was supplied to the oxidizing agent chamber side at 200 $ml \cdot min^{-1}$ to conduct electric generation test, so that terminal voltage of the cell was measured at current density of 0.1 $A \cdot cm^{-2}$.
Also, abbreviations of a variety of materials used in the examples and comparative examples were shown as below.

A: polyethylene microporous film (membrane thickness of 25 μm, pore diameter of 0.03μ m and void ratio of 40%)
DADM: diallyl dimethyl ammonium chloride
DADE: diallyl diethyl ammonium chloride
DAME: diallyl ethyl methyl ammonium chloride
DAP: 1,1-diallyl-3,3,5,5-tetramethyl piperidinium bromide
C3: N,N,N',N'-tetraallyl-N,N'-dimethyl propane diammonium-dichloride
C4: N,N,N',N'-tetraallyl-N,N'-dimcthyl butane diammonium-dichloride
C6: N,N,N',N'-tetraallyl-N,N'-dimethyl hexane diammonium-dichloride
C0: tetraallyl ammonium bromide
APS: ammonium persulfate
MeOH: methanol
1-BuOH: 1-butanol.

(Example 1)

According to the constitution table shown as Table 1, a variety of monomers, cross-linking agent, polymerization initiator and solvent (water) were mixed and stirred to obtain an aqueous solution $MS_0$ of the monomeric composition without containing methanol which was an introduction accelerator. Separately, to aqueous solutions of the monomeric composition (not containing methanol) prepared in a similar way, 100 parts by mass and 50 parts by mass of methanol which was an introduction accelerator was respectively mixed and stirred to prepare a monomeric composition dilutions $MS_{100}$ and $MS_{50}$.
Next, a microporous film A with a size of 20 cm×20 cm was immersed in the monomeric composition dilution $MS_{100}$ in a vat at room temperature for 5 minutes, and then taken out to further sequential immersion in the monomeric composition dilution $MS_{50}$ and the monomeric composition aqueous solution $MS_0$ in a similar way, so that the monomeric composition was introduced into void portion of the microporous film. Then, each surface of the microporous film taken out from the vat was covered with separating material which was a polyester film having a thickness of 100 μm, and heated under pressure of 0.3 MPa of nitrogen at 50°C for 5 hours, so that the monomer component introduced in the void portion was polymerized and cross-linked. After the anion-exchange membrane of the present invention obtained after polymerization was immersed in methanol for 1 hour to wash, it was immersed in large excess of 0.5 $mol \cdot L^{-1}$-NaOH aqueous solution to ion-exchange its counterion from a bromide ion to a hydroxide ion, followed by washing with the ion-exchange water. For thus-obtained anion-exchange resin of the present invention, a variety of evaluations was performed. The results of evaluation were shown in Table 2.

Table 1

Table 1

| | Micro-porous film | Constitution of monomeric composition except for introduction accelerator | | | | | | | | | | introduction accelerator |
|---|---|---|---|---|---|---|---|---|---|---|---|---|
| | | Monomer component & cross-linking agent (parts by mass) | | | | | | | | Polymerization initiator (parts by mass) | Solvent (parts by mass) | |
| | | DADM | DADE | DAME | DAP | C3 | C4 | C6 | C0 | APS | water | |
| Example 1 | A | 90 | | | | 10 | | | | 5 | 30 | MeOH |
| Example 2 | A | 90 | | | | 10 | | | | 5 | 30 | MeOH |
| Example 3 | A | 90 | | | | 10 | | | | 5 | 30 | MeOH |
| Example 4 | A | | 90 | | | 10 | | | | 5 | 30 | MeOH |
| Example 5 | A | | | 90 | | 10 | | | | 5 | 30 | MeOH |
| Example 6 | A | 90 | | | | | 10 | | | 5 | 30 | MeOH |
| Example 7 | A | 90 | | | | | | 10 | | 5 | 30 | MeOH |
| Example 8 | A | 90 | | | | 10 | | | | 5 | 50 | MeOH |
| Example 9 | A | 90 | | | | 10 | | | | 5 | 30 | 1-BuOH |
| Example 10 | A | 90 | | | | 10 | | | | 5 | 30 | MeOH |
| Example 11 | A | | | | 83 | | | | 17 | 13 | 42 | 1-BuOH |
| Comp Ex 1 | A | 90 | | | | 10 | | | | 5 | 30 | none |
| Comp Ex 2 | A | 90 | | | | 10 | | | | 5 | 50 | none |

NOTE:
Example 1: MS100→MS50→MS0
Example 2: MS100→MS50→MS20→MS0
Example 3: MS100→MS70→MS50→MS20→MS0
Example 4-8: MS100→MS50→MS0
Example 9: MS3
Example 10: MS100
Example 11: MS8
Comp Ex 1-2: MS0
Comp Ex 3: not indicated because of the use of another monomer

Table 2

Table 2

| | anion-exchange capacity [mmol/g-dried membrane] | water content ratio [%] | membrane resistance [Ω·cm2] | membrane thickness [mm] | anion-exchange capacity retention rate [%] | Fuel cell output voltage [V@0.1A/cm2] | |
|---|---|---|---|---|---|---|---|
| | | | | | | Before | After |
| | | | | | | durability test | |
| Example 1 | 1.5 | 46 | 0.16 | 31 | 98 | 0.4 | 0.36 |
| Example 2 | 1.6 | 47 | 0.15 | 32 | 98 | 0.4 | 0.37 |
| Example 3 | 1.8 | 49 | 0.13 | 34 | 98 | 0.42 | 0.38 |
| Example 4 | 1.4 | 45 | 0.17 | 31 | 99 | 0.39 | 0.36 |
| Example 5 | 1.4 | 46 | 0.16 | 32 | 99 | 0.4 | 0.37 |
| Example 6 | 1.4 | 43 | 0.18 | 29 | 98 | 0.39 | 0.35 |
| Example 7 | 1.3 | 44 | 0.17 | 30 | 99 | 0.39 | 0.37 |
| Example 8 | 1.5 | 45 | 0.16 | 31 | 98 | 0.39 | 0.35 |
| Example 9 | 1.7 | 48 | 0.14 | 33 | 98 | 0.41 | 0.38 |
| Example 10 | 0.7 | 48 | 0.2 | 29 | 92 | 0.36 | 0.27 |
| Comp Ex 1 | 0 | 0 | unmeasurable | 25 | - | unmeasurable | unmeasurable |
| Comp Ex 2 | 0 | 0 | unmeasurable | 25 | - | unmeasurable | unmeasurable |
| Comp Ex 3 | 1.7 | 35 | 0.21 | 35 | 89 | 0.34 | 0.18 |
| NOTE: The membrane thickness was an average value of measurements of 10 arbitrary points in a region except for outer edge of the membrane. All of the above 10 measurements were within the range of ±1.5 μm of the above average value. | | | | | | | |

(Example 2)

The aqueous solution $MS_0$ of the monomeric composition and the monomeric composition dilutions $MS_{100}$ and $MS_{50}$ were prepared as in Example 1, and the monomeric composition dilution $MS_{20}$ was also prepared in a similar way as the preparation of the monomeric composition dilution $MS_{100}$ except for the added methanol amount was changed to 20 parts by mass.
Next, a microporous film A with a size of 20 cm×20 cm was immersed in the monomeric composition dilution $MS_{100}$ in a vat at room temperature for 10 minutes, and then taken out to further sequential immersion in the monomeric composition dilution $MS_{50}$, the monomeric composition dilution $MS_{20}$ and the monomeric composition aqueous solution $MS_0$ in a similar way, so that the monomeric composition was introduced into the void portion of the microporous film. Then, each surface of the microporous film taken out from the vat was covered with separating material which was a polyester film having a thickness of 100 μm, and heated under pressure of 0.3 MPa of nitrogen at 50°C for 5 hours, so that the monomer component introduced in the void portion was polymerized and cross-linked. After the polymerized and cross-linked sample was treated as in Example 1, the evaluations as in Example 1 were performed for the obtained anion-exchange membrane of the present invention. The results are shown in Table 2.

(Example 3)

The aqueous solution $MS_0$ of the monomeric composition and the monomeric composition dilutions $MS_{100}$ and $MS_{50}$ were prepared as in Example 1, and the monomeric composition dilutions $MS_{70}$ and $MS_{20}$ were also prepared in a similar way as the preparation of the monomeric composition dilution $MS_{100}$ except for the added methanol amounts were changed to 70 parts by mass and 20 parts by mass, respectively.
Except for changing the immersing order of the film to the order of the monomeric composition dilution $MS_{100}$ → the monomeric composition dilution $MS_{70}$ → the monomeric composition dilution $MS_{50}$ → the monomeric composition dilution $MS_{20}$ → the monomeric composition $MS_0$, the preparation of the anion-exchange membrane, treatment and evaluation were done as in Example 2. The results are shown in Table 2 as well.

(Examples 4 to 8)

Except for preparing the monomeric composition according to the constitution table shown as Table 1, the preparation of the anion-exchange membrane, treatment and evaluation were done as in the Example 1. The results are shown in Table 2 as well.

(Example 9)

The above aqueous solution $MS_0$ of the monomeric composition was added with 3 parts by mass of 1-butanol as an introduction accelerator to obtain a homogeneous solution. Then, a microporous film A with a size of 20 cm×20 cm was immersed in the monomeric solution at room temperature, and then taken out to introduce the monomeric composition into the void portion of the microporous film. Except for the above procedure, the preparation of the anion-exchange membrane, treatment and evaluation were done as in the Example 2. The results are shown in Table 2 as well.

(Example 10)

The monomeric composition was introduced into the void of the microporous film A only by immersing the film in the monomeric composition dilution $MS_{100}$ in a vat at room temperature for 5 minutes followed by taking it out. Except for the above procedure, the preparation of the anion-exchange membrane, treatment and evaluation were done as in the Example 1. The results are shown in Table 2 as well.

(Comparative Examples 1 to 2)

The introduction procedures of the monomeric composition to the void of a microporous film A in the above Example 1 and Example 8 was changed to directly immersing the films in the monomer constitution $MS_0$ not containing an introduction accelerator without preliminarily immersing in the monomeric composition dilution. However, it was not possible to introduce the monomeric composition so as to fill in the void portion of the microporous film. For confirmation, the same procedures were performed as in Example 1 to evaluate the membrane. The results are shown in Table 2 as well.

(Comparative Example 3)

98 g of chloromethylstyrene, 2 g of divinylbenzene and as a polymerization initiator, 5 g of benzoyl peroxide were respectively weighed and placed in a 300 ml glass flask, followed by mixing to obtain a composition. The porous film A (20 cmx20 cm) in Table 1 was immersed in the composition at room temperature for 10 minutes.
Next, the porous membrane was taken out from the polymerizable composition, and each surface of the porous membrane was covered with 100 μm-polyester film as a separating material, followed by thermal polymerization under pressure of 0.3 MPa of nitrogen, at 80°C for 5 hours.
The obtained membrane-like material was immersed in an aqueous solution containing 6 wt% of trimethyl amine and 25wt% of acetone at room temperature for 16 hours, followed by immersion in large excess of 0.5 mol·$L^{-1}$-NaOH aqueous solution to ion-exchange its counterion from a chloride ion to a hydroxide ion. Then, the membrane-like material was washed with ion-exchange water to obtain an anion-exchange membrane. The obtained anion-exchange membrane was evaluated as in Example 1. The results are shown in Table 2 as well.

(Reference Example 1)

In reference to a report of Hayashi et al. (Tetrahedron 48(11) 1999,1992), 1-allyl-3,3,5,5-tetramethyl piperidine was obtained. 14 g of this compound was dissolved in 30 ml of dimethyl formamide, added with 28 g of allyl bromide, and heated at 80°C for 20 hours. The reaction solution was cooled to filter out the precipitated solid to obtain 3.6 g of 1,1-diallyl-3,3,5,5-tetramethyl piperidinium bromide (yield 15%).
$^1$H-NMR ($D_2O$): δ (ppm) =

| | |
|---|---|
| 5.96 | (tdd, J= 7, 10, 17Hz, 2H, -C$\underline{H}$= ) |
| 5.61 | (d, J= 10Hz, 2H, = $CH_2$cis) |
| 5.56 | (d, J= 17Hz, 2H, = $CH_2$trans) |
| 3.92 | (d, J= 7Hz, 4H, -$CH_2$-allyl) |
| 3.09 | (s, 4H, $CH_2$-$N^+$) |
| 1.46 | (s, 2H, -$CH_2$-) |
| 1.08 | (s, 12H, -$CH_3$) |

IR (extracted): λ ($cm^{-1}$) =
3070, 3004 (vinyl)
2991, 2960 (methyl)
1635 (vinyl)
1486,1472,1428 (C-H)
955,939 (vinyl)
melting point: 144 to 145°C

(Example 11)

83 parts by mass of 1,1-diallyl-3,3,5,5-tetramethyl piperidinium bromide, 17 parts by mass of tetraally] ammonium bromide, and 13 parts by mass of APS were dissolved in 42 parts by mass of ion-exchange water, and then added with 8 parts by mass of 1-butanol as an introduction accelerator to obtain a homogeneous solution. Next, a microporous film A with a size of 20 cm×20 cm was immersed in the monomer solution at room temperature, and then taken out, so that the monomeric composition was introduced to the void portion of the microporous film. Then, each surface of the microporous film in which the monomer was introduced was covered with a separating material which was a polyester film having a thickness of 100 μm, and heated under pressure of 0.4 MPa of nitrogen at 60°C for 2 hours and at 70°C for 24 hours, so that the monomer component introduced to the void portion was polymerized and cross-linked. After the polymerization, the obtained anion-exchange membrane of the present invention was immersed in methanol for 1 hour for washing, and then, immersed in large excess of 0.5 mol·$L^{-1}$-NaOH aqueous solution to ion-exchange its counterion from a bromide ion to a hydroxide ion, followed by washing with ion-exchange water. The ion-exchange capacity of the obtained membrane was 0.9 mmol/g-dried membrane, and ion-exchange capacity retention rate was 95% after deterioration test.

BRIEF DESCRIPTION OF THE DRAWINGS

FIG. 1 is a conceptual diagram showing a basic structure of a solid polymer type fuel cell.

EXPLANATION OF SYMBOLS

1 cell bulkhead
2 fuel gas flow hole
3 oxidizing agent gas flow hole
4 fuel chamber side gas diffusion electrode
5 oxidizing agent chamber side gas diffusion electrode
6 solid polymer electrolyte membrane
7 fuel chamber
8 oxidizing agent chamber

**Claims**

1. An anion-exchange membrane comprising a microporous film of resin insoluble in water, and an anion-exchange resin filled in a void of said microporous film, wherein said anion-exchange resin comprises a cross-linked polymer having an anion-exchange group expressed by the following formula (1):

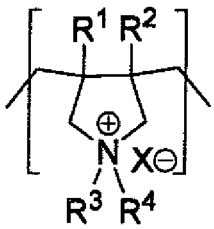

(1)

where each of $R^1$, $R^2$, $R^3$ and $R^4$ independently indicates any one of a hydrogen atom, a halogen atom and an alkyl group having carbon number of 1 to 10, $R^3$ and $R^4$ may mutually be coupled to form a ring, and $X^-$ is a halide ion, a hydroxide ion or an anion of organic acid or inorganic acid.

2. The anion-exchange membrane as set forth in claim 1, wherein said cross-linked polymer has a cross-linking site expressed by the following formulas (2) or (2)':

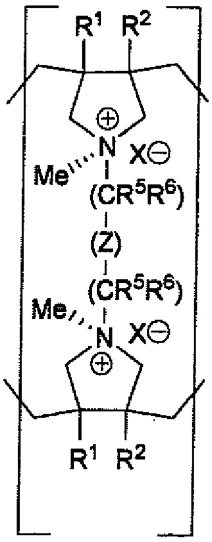

(2)

or

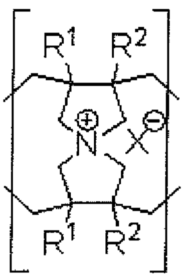

(2)'

where $R^1$, $R^2$ and $X^-$ are respectively the same as the $R^1$, $R^2$ and $X^-$ in said formula (1), $R^5$ and $R^6$ independently indicates a hydrogen atom, a halogen atom, an alkyl group having carbon number of 1 to 10 or a hydroxyl group, and Z is a group expressed by the following formula: - $(CH_2)_n1$-, -NH-, $-N(CH_3)-$,

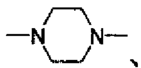,

$-NH-(CH_2)_3-NH-$, $-NH-(CH_2)_4-NH-$, -O-, $-(CH_2)_{n\,2}-O-(CH_2)_{n\,3}-$, $-O-(CH_2)_{n\,4}-O-$, $-O-(CH_2)_{n\,5}-(O-CH_2-CH_2)_{n\,6}-O-$ where n1 is an integer of 0 to 10, and n2, n3, n4, n5 and n6 are respectively independently an integer of 1 to 10.

**3.** A method for producing the anion-exchange membrane as set forth in claim 1 or 2 comprising:

(1) introducing a monomeric composition comprising a monomer component, including a diallyl ammonium salt, and a cross-linking agent into a void of a microporous film of resin insoluble in water, and
(2) polymerizing and crosslinking said monomeric composition introduced in the void of said microporous film.

**4.** The method as set forth in claim 3, wherein introduction of said monomeric composition into the void of said microporous film in the step (1) is conducted by an introduction method comprising the step (1a) of preparing a first raw solution having permeability to said microporous film which is obtained by dissolving said monomer component and

cross-linking agent in an introduction accelerator which is an organic solvent having permeability to said microporous film and water-miscible property, or a mixed solvent of a polar organic solvent except for the introduction accelerator or water and the introduction accelerator; and bringing said microporous film into contact with said first raw solution.

**5.** The method as set forth in claim 4., wherein said introduction method further comprises the step (1b) of preparing a second raw solution including a mixed solution of said introduction accelerator and a solution of said monomer component and cross-linking agent, the mixed solution having lower concentration of said introduction accelerator than a concentration of said introduction accelerator in said first raw solution, and higher concentration of said monomer component than a concentration of said monomer in said first raw solution; and bringing said microporous film, brought into contact with said first raw solution in the step (1a), into contact with said second raw solution.

**6.** The method as set forth in claim 4, wherein the introduction method further comprises the step (1b') of preparing a plurality of raw solutions including a mixed solution of said introduction accelerator and a solution of said monomer component and cross-linking agent, in which each concentration of said introduction accelerator in said raw solutions is sequentially lower than the concentration of said introduction accelerator in said first raw solution and each concentration of said monomer component in said raw solutions is sequentially higher than the concentration of said monomer component in said first raw solution; and sequentially bringing said microporous film, brought into contact with said first raw solution in the step (1a), into contact with said respective raw solutions in descending order according to a concentration of said introduction accelerator in raw solution.

**7.** The method as set forth in any one of claims 4 to 6, wherein said introduction accelerator is a water-soluble organic solvent having permittivity of 15 or more.

**8.** The method as set forth in any one of claims 4 to 7, wherein an amount of the introduction accelerator in said first raw solution is 1 to 200 parts by mass per 100 parts by mass of total amount of said monomer component and cross-linking agent.

**9.** A separation membrane for a solid polymer type fuel cell comprising the anion-exchange membrane as set forth in claim 1 or 2.

**10.** An ion-exchange membrane/gas diffusion electrode assembly for a solid polymer type fuel cell, wherein gas diffusion electrodes are bonded to both surfaces of the separation membrane for a solid polymer type fuel cell as set forth in claim 9.

**11.** A solid polymer type fuel cell wherein the ion-exchange membrane/gas diffusion electrode assembly for a solid polymer type fuel cell as set forth in claim 10 is installed.

FIG. 1

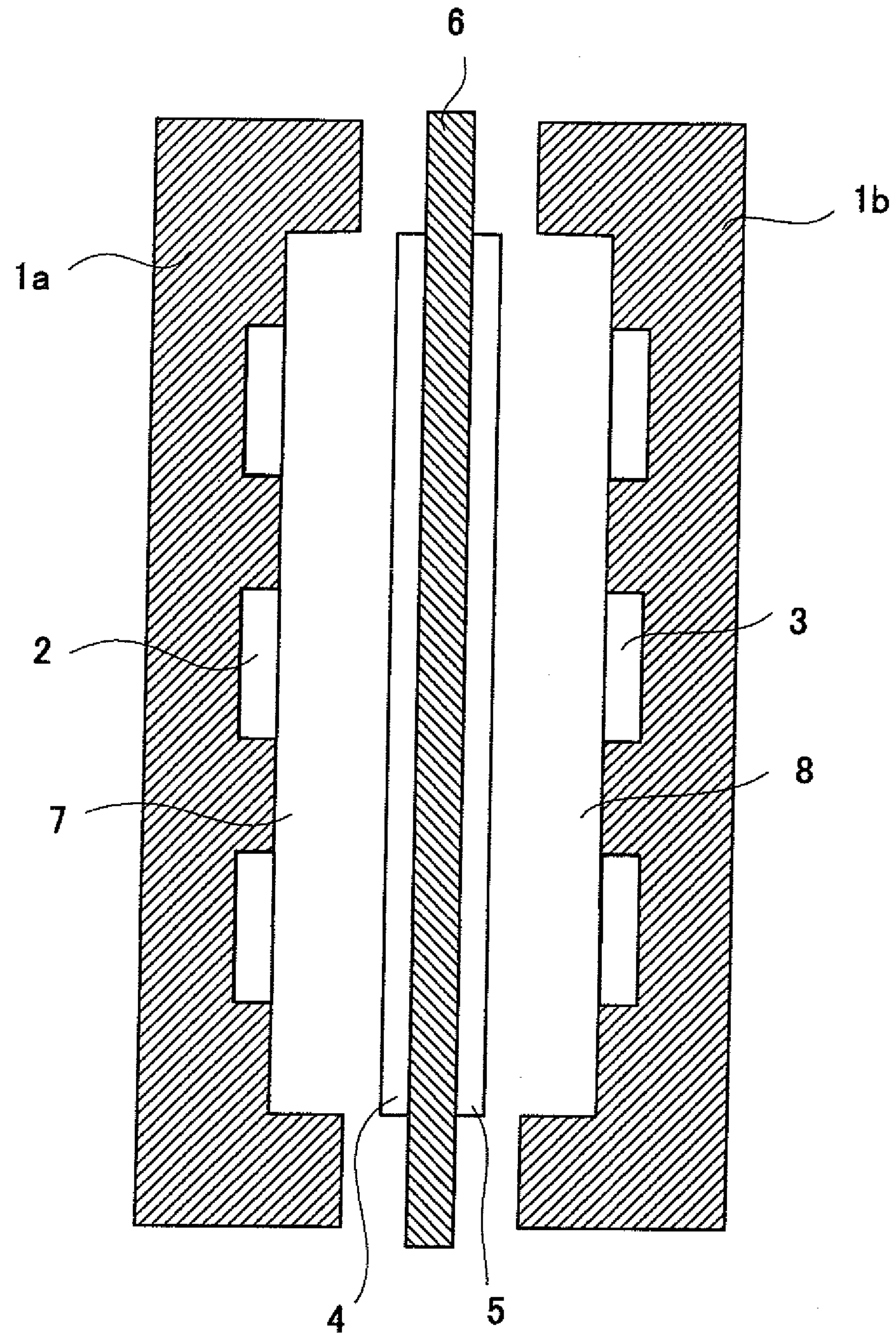

## INTERNATIONAL SEARCH REPORT

International application No.
PCT/JP2009/069290

A. CLASSIFICATION OF SUBJECT MATTER
*C08J5/22*(2006.01)i, *B01J41/14*(2006.01)i, *B01J47/12*(2006.01)i, *C08F26/02*(2006.01)i, *H01B1/06*(2006.01)i, *H01B13/00*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08J5/22, B01J41/14, B01J47/12, C08F26/02, H01B1/06, H01B13/00, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2005/098875 A1 (Toagosei Co., Ltd.), 20 October 2005 (20.10.2005), description, paragraphs [0001] to [0008], [0014], [0017], [0023], [0025], [0028], [0029]; claim 2<br>& US 2009/0004548 A1 & EP 1737000 A1<br>& KR 10-2006-0134197 A & CN 1942980 A<br>& CA 2562510 A | 1-4,7-11<br>5,6 |
| Y<br>A | JP 2002-212222 A (Nippon Shokubai Co., Ltd.), 31 July 2002 (31.07.2002), claims 1, 2; paragraphs [0007], [0016] to [0028], [0050], [0068] to [0084]<br>(Family: none) | 1-4,7-11<br>5,6 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 January, 2010 (04.01.10) | 19 January, 2010 (19.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/069290

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-167839 A (Kureha Corp.), 05 July 2007 (05.07.2007), paragraphs [0020], [0033] (Family: none) | 4-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11135137 B
- JP H11273695 B
- JP 2000331693 A
- JP 2001302729 A
- JP 2009143975 A
- JP H9216964 B
- JP 2002338721 A
- JP 2003086193 A
- JP 2002367626 A


### Non-patent literature cited in the description


- **Hayashi et al.** *Tetrahedron,* 1992, vol. 48 (11), 1999